# EUROPEAN PATENT APPLICATION

(11) **EP 2 854 434 A1**
(43) Date of publication of application: **01.04.2015**
(21) Application number: 14275187.4
(22) Date of filing: 05.09.2014
(51) Int. Cl.: H04W 12/10, H04W 12/06, G09F 3/20, H04W 84/12, H04W 88/16

(54) **Wireless communication method for an Electronic Shelf Label (ESL) system**

(30) Priority: 27.09.2013 KR 20130115389
(71) Applicant: Samsung Electro-Mechanics Co., Ltd., Suwon-si, Gyeonggi-do 443-743 (KR)
(72) Inventor: Lee, Chung Hee, 443-743 Gyeonggi-Do (KR); Yoon, Dae Gil, 443-743 Gyeonggi-Do (KR)
(74) Representative: Potter Clarkson LLP

(57) **Abstract**

Disclosed herein is a wireless communication method in an ESL system including: selecting any rows and columns in a matrix table to input each value of the selected rows and columns and values of intersecting points of the rows and the columns to matrix security fields of a data frame, respectively; wirelessly transmitting the frame from a tag to a gateway or from the gateway to the tag; receiving the transmitted frame and using a matrix value written in the matrix security fields, respectively, to retrieve the values of the intersecting points; discriminating whether the values of the retrieved intersecting point are equal to the values of the intersecting points written in the matrix security field of the received frame; and when two values are equal to each other in the discrimination, determining a received frame as a normal frame and analyzing the remaining field of the frame.

## Description

### CROSS REFERENCE(S) TO RELATED APPLICATIONS

This application claims the foreign priority benefit of Korean Patent Application Serial No. 10-2013-0115389, entitled "Wireless Communication Method In ESL (Electronic Shelf Label) System" filed on September 27, 2013, which is hereby incorporated by reference in its entirety into this application.

### BACKGROUND OF THE INVENTION

### 1. Technical Field

The present invention relates to a wireless communication method in an electronic shelf label (ESL) system, and more particularly, to a wireless communication method in an ESL system capable of solving a security problem in wireless communication and reducing a computation operation quantity of a tag.

### 2. Description of the Related Art

Today, a price update system called an electric shelf label (ESL) system has been built in a large-scale discount store, and the like. The ESL system does not rely on a traditional method of writing a price on paper but relies on a method of electronically displaying a price on a display screen.

The ESL system is configured to generally include a server, a sink, and a tag. The sink and the tag use a wireless communication technology called Zigbee to transmit and receive data (information) and may be vulnerable to security in terms of characteristics of wireless communication. Therefore, a security algorithm based on a method of encrypting data using an encryption key in a Zigbee protocol has been proposed. However, the encryption method requires a lot of computations to encrypt and decode data and therefore requires much power. The tag uses a battery and therefore there is a need to simplify a computation operation if possible to reduce power consumption.

### SUMMARY OF THE INVENTION

An object of the present invention is to provide a wireless communication method in an ESL system capable of solving a security problem in wireless communication and reducing a computation operation quantity of a tag to reduce power consumption of a battery, by applying a simple security algorithm of a matrix type.

According to an exemplary embodiment of the present invention, there is provided a wireless communication method in an ESL system, including: a) selecting any rows and columns in a matrix table to input each value of the selected rows and columns and values of intersecting points of the rows and the columns to matrix security fields of a data frame, respectively; b) wirelessly transmitting the frame from a tag to a gateway or from the gateway to the tag; c) receiving the transmitted frame by the gateway or the tag and using a matrix value written in the matrix security fields, respectively to retrieve the values of the intersecting points in the matrix table; d) discriminating whether the values of the retrieved intersecting point are equal to the values of the intersecting points written in the matrix security field of the received frame; and e) when two values are equal to each other in the discrimination, determining the received frame as a normal frame and analyzing the remaining field of the frame.

The d) discriminating may further include determining and discarding the received frame as an abnormal frame when the two values are not equal to each other.

Each value of columns and rows selected in the a) may be each input to a 4 bit field of the data frame and the values of the intersecting points of the rows and the columns may be input to a 8 bit field of the data frame.

The 4 bit field of the data frame to which each value of the rows and the columns may be input and the 8 bit field of the data frame to which the values of the intersecting points of the rows and the columns are input may be configured of the matrix security field of the data frame format.

### BRIEF DESCRIPTION OF THE DRAWINGS

FIG. 1 is a diagram schematically illustrating a configuration of an ESL system in which a wireless communication method in an ESL system according to an exemplary embodiment of the present invention is adopted.
FIG. 2 is a diagram illustrating an example of a Zigbee data frame structure of a general network level in which a security technology is adopted.
FIG. 3 is a flow chart illustrating an execution process of a wireless communication method in an ESL system according to an exemplary embodiment of the present invention.
FIG.4 is a diagram conceptually illustrating a security algorithm of a matrix type which is adopted in the method according to the exemplary embodiment of the present invention.
FIG. 5 is a diagram illustrating a state in which each value of rows and columns and intersecting points thereof is each input to matrix security fields of a frame format.

### DESCRIPTION OF THE PREFERRED EMBODIMENTS

Terms and words used in the present specification and claims are not to be construed as a general or dictionary meaning, but are to be construed to meaning and concepts meeting the technical ideas of the present invention based on a principle that the inventors can appropriately define the concepts of terms in order to describe their own inventions in the best mode.

Throughout the present specification, unless explicitly described to the contrary, "comprising" any components will be understood to imply the inclusion of other elements rather than the exclusion of any other elements. A term "part", "module", "device", or the like, described in the specification means a unit of processing at least one function or operation and may be implemented by hardware or software or a combination of hardware and software.

Hereinafter, exemplary embodiments of the present invention will be described in detail with reference to the accompanying drawings.

Hereinafter, an ESL system in which a method of an exemplary embodiment of the present invention is adopted will first be described, prior to describing exemplary embodiments of the present invention.

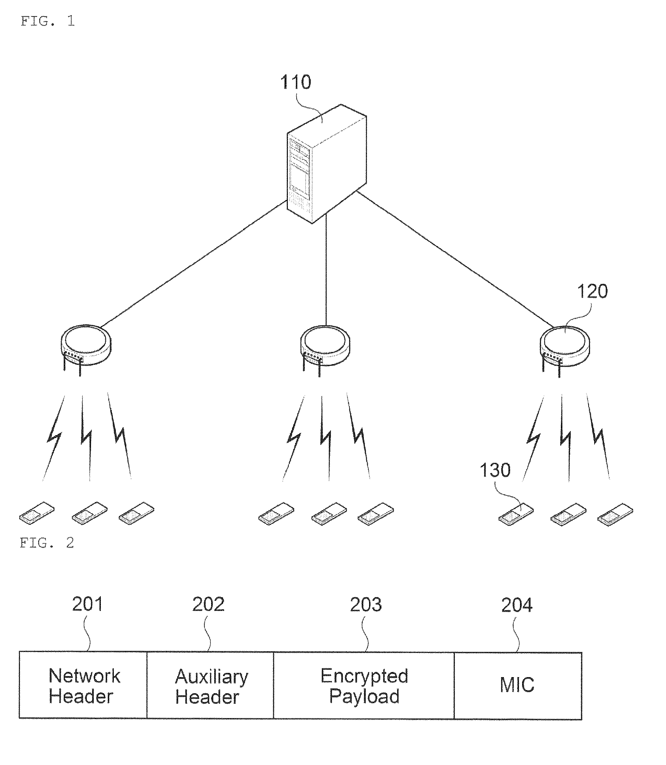

FIG. 1 is a diagram schematically illustrating a configuration of an ESL system in which a wireless communication method in an ESL system according to an exemplary embodiment of the present invention is adopted.

Referring to FIG. 1, an ESL system is configured to include a server 110, a sink (gateway) 120, and a tag 130.

The server 110 has a price database. The sink (gateway) 120 serves to repeat between the server 110 and the tag 130. That is, the sink 120 serves to receive price formation (data) from the server 110 and transfer the received price information to each tag 130. The tag 130 receives the price information (data) from the sink (gateway) 120 and displays the price information on a display screen (for example, LCD screen).

The sink (gateway) 120 and the tag 130 transmit and receive a signal using a wireless communication technology called Zigbee. In terms of wireless communication, the sink 120 and the tag 130 may be easily installed but vulnerable to security. For example, there is a possibility that a malicious person may analyze wireless communication data, figure out patterns, and then manipulate the patterns to transmit the wireless communication data. Therefore, to cope with the security problem of communication, various encryption security methods are introduced. The encryption method is a method for encrypting and transmitting data at the time of transmission and decoding them again at the time of reception. A Zigbee protocol itself also includes a security mechanism using an encryption technology. FIG. 2 is a diagram illustrating an example of a Zigbee data frame structure of a general network level in which a security technology is adopted.

Referring to FIG. 2, a network header 201 includes information required for frame transmission in a network layer and an auxiliary header 202 includes a security control filed required to process an encryption technology. This designates a level of security applied to the corresponding frame and both of message encryption and integrity are processed at a time by a counter mode with cipher block chaining message (CCM) algorithm (one of the encryption algorithms). An encrypted payload 203 is stored with encrypted data. A many integrated core (MIC) 204 is used to protect the integrity of the header and the payload.

Meanwhile, the tag 130 uses a coin battery and therefore needs to be designed to simplify a computation operation if possible. When the tag 130 uses an encryption security method of the Zigbee protocol itself, a computation operation quantity is largely increased at the time of encryption and decoding and thus a used quantity of a battery is suddenly increased. Therefore, a simple security algorithm without a complicated computation operation is required.

In consideration of the above matters, the exemplary embodiment of the present invention is to provide a wireless communication method in an ESL system capable of solving a security problem in wireless communication and reducing a computation operation quantity of a tag to reduce power consumption of a battery.

Hereinafter, the wireless communication method in the ESL system according to the exemplary embodiment of the present invention based on the ESL system having the above configuration will be described.

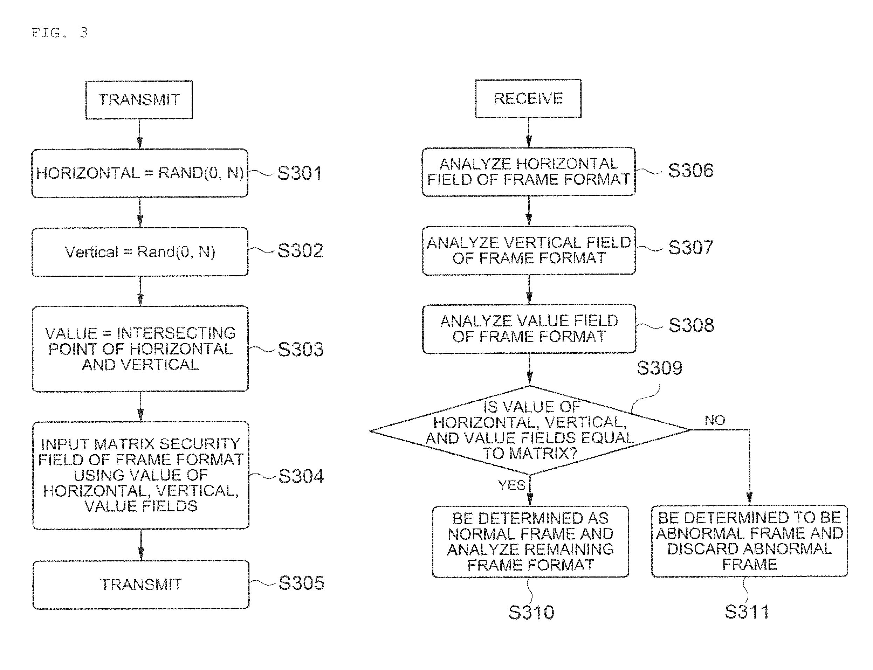

FIG. 3 is a flow chart illustrating an execution process of a wireless communication method in an ESL system according to an exemplary embodiment of the present invention.

Referring to FIG. 3, the wireless communication method in the ESL system according to the exemplary embodiment of the present invention first selects any rows and columns in a matrix table to input each value of the selected rows and columns and values of intersecting points of the rows and the columns to each matrix security field of the data frame (S301 to S304). Here, each value of the selected rows and columns may be each input to a 4 bit field of the data frame and the values of the intersecting points of the rows and the columns may be input to a 8 bit field of the data frame. In this case, the 4 bit field of the data frame to which each value of the rows and the columns is input and the 8 bit field of the data frame to which the values of the intersecting points of the rows and the columns are input may be configured of the matrix security field of the data frame format.

Here, an exemplary embodiment will be described with reference to the input to the matrix security field of the data frame and the transmission and reception of the data packet to which a security value is input.

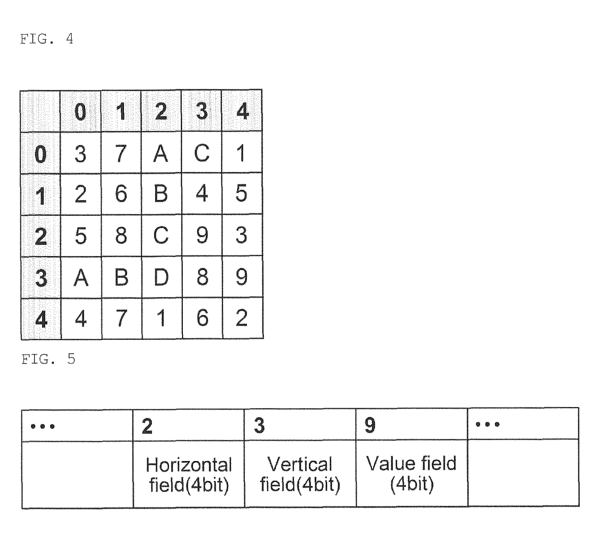

The method according to the exemplary embodiment of the present invention introduces the security algorithm of the matrix type as illustrated in FIG. 4. The exemplary embodiment of the present invention illustrates a 5 5 matrix but is only one example and therefore various matrix types such as 4 4, 6 6, and 8 8 matrices may be applied.

The gateway 120 and the tag 130 share a matrix table of FIG. 4. Every time data are transferred therebetween, values are randomly selected from the matrix table and are transmitted. For example, in the matrix table of FIG. 4, an intersecting value of a horizontal second row and a vertical third column is "9".

In this case, as illustrated in FIG. 5, "2" which is a value of the row is input to a 4 bit field (horizontal field) which is the matrix security field of the data frame format, "3" which is the value of the column is input to a 4 bit field (vertical field) which is the matrix security field, and then "9" which is the intersecting value is input to a 8 bit field (value field) which is the matrix security field, which are in turn transmitted. Next, at the receiving side, the intersecting points of the rows and the columns in the matrix table as illustrated in FIG. 4 are found with values of 2 and 3 which are the values of the rows and the columns. Further, when the found value is equal to "9", the packet is determined to be a normal packet.

By the above description, when the input to the matrix security field of the data frame is completed, the frame (packet) is wirelessly transmitted from the tag 130 to the gateway 120 or from the gateway 120 to the tag 130 (S305).

Next, the gateway 120 or the tag 130 receives the transmitted frame (packet) and uses matrix values each written in the matrix security field to retrieve the values of the intersecting points in the matrix table (S306 to S308). That is, the gateway 120 or the tag 130 each analyzes the horizontal field, the vertical field, and the value field of the received frame format and compares the analyzed result with the matrix table stored in the inside (memory) thereof.

Further, it is discriminated that the values of the retrieved intersecting points are equal to the values of the intersecting points written in the matrix security filed of the received frame (packet) (S309). That is, it is discriminated that each value of the horizontal field, the vertical field, and the value field which are analyzed as described above is equal to the values written in the matrix table.

In the discrimination of S309, when the two values are equal to each other, the received frame (packet) is determined to be the normal frame (packet) and the remaining field of the frame is analyzed (S310).

Further, in the discrimination of S309, when the two values are not equal to each other, the received frame (packet) is determined to be an abnormal frame (packet) and discarded (S311).

As described above, the wireless communication method in the ESL system according to the exemplary embodiments of the present invention applies the simple security algorithm of the matrix type to solve the security problem in the wireless communication and reduce the computation operation quantity of the tag to reduce the power consumption of the battery.

According to the exemplary embodiments of the present invention, it is possible to solve the security problem in the wireless communication and reduce the computation operation quantity of the tag to reduce the power consumption of the battery, by applying the simple security algorithm of the matrix type.

Although the exemplary embodiments of the present invention have been disclosed for illustrative purposes, the present invention is not limited thereto, but those skilled in the art will appreciate that various modifications, additions and substitutions are possible, without departing from the scope and spirit of the present invention as disclosed in the accompanying claims. Therefore, the protection scope of the present invention must be construed by the appended claims and it should be construed that all spirits within a scope equivalent thereto are included in the appended claims of the present invention.

## Claims

1. A wireless communication method in an ESL system, comprising:
a) selecting any rows and columns in a matrix table to input each value of the selected rows and columns and values of intersecting points of the rows and the columns to matrix security fields of a data frame, respectively;
b) wirelessly transmitting the frame from a tag to a gateway or from the gateway to the tag;
c) receiving the transmitted frame by the gateway or the tag and using a matrix value written in the matrix security fields, respectively to retrieve the values of the intersecting points in the matrix table;
d) discriminating whether the values of the retrieved intersecting point are equal to the values of the intersecting points written in the matrix security field of the received frame; and
e) when two values are equal to each other in the discrimination, determining the received frame as a normal frame and analyzing the remaining field of the frame.

2. The wireless communication method according to claim 1, wherein the d) discriminating may further include determining and discarding the received frame as an abnormal frame when the two values are not equal to each other.

3. The wireless communication method according to claim 1, wherein each value of columns and rows selected in the a) is each input to a 4 bit field of the data frame and the values of the intersecting points of the rows and the columns are input to a 8 bit field of the data frame.

4. The wireless communication method according to claim 3, wherein the 4 bit field of the data frame to which each value of the rows and the columns is input and the 8 bit field of the data frame to which the values of the intersecting points of the rows and the columns are input are configured of the matrix security field of a data frame format.

5. The wireless communication method according to claim 1, wherein in the c), the gateway or the tag analyzes a horizontal field, a vertical field, and a value field of a received frame format, respectively and compares the analyzed result with a matrix table stored in an inside (memory) thereof.
